# EUROPÄISCHE PATENTSCHRIFT

(11) **EP 3 671 141 B1**
(45) Veröffentlichungstag und Bekanntmachung des Hinweises auf die Patenterteilung: **03.08.2022**
(21) Anmeldenummer: 18214937.7
(22) Anmeldetag: 20.12.2018
(51) Int. Cl.: G01G 3/14, G01L 1/22

(54) **WÄGEZELLE UND WIEGEFUSS**
LOAD CELL AND WEIGHING FOOT
CELLULE DE PESAGE ET PIED DE PESAGE

(43) Veröffentlichungstag der Anmeldung: 24.06.2020
(73) Patentinhaber: Bizerba SE & Co. KG, 72336 Balingen (DE)
(72) Erfinder: Fritsch, Andreas, 72336 Balingen (DE); Schreiber, Annika, 72336 Balingen (DE); Eschment, Jens, 72406 Bisingen (DE); Metzger, Frank, 72461 Albstadt (DE)
(74) Vertreter: Manitz Finsterwald Patent- und Rechtsanwaltspartnerschaft mbB

(56) Entgegenhaltungen:
- EP-A1- 0 266 917
- EP-A1- 0 640 813
- EP-A1- 1 998 150

## Beschreibung

Die vorliegende Erfindung betrifft eine Wägezelle, insbesondere eines Wiegefußes. Die Wägezelle umfasst einen, insbesondere um eine Mittelachse rotationssymmetrischen, Federkörper mit einem äußeren Lagerring, einem inneren Krafteinleitungselement und einem ringförmigen Verformungsabschnitt, über den der Lagerring und das Krafteinleitungselement fest miteinander verbunden sind, einen Messumformer zur Erzeugung eines einem auf das Krafteinleitungselement einwirkenden Gewicht entsprechenden Ausgangssignals, und mit dem Messumformer elektrisch verbundene Mittel, die dazu ausgebildet sind, das von dem Messumformer erzeugte Ausgangssignal nach extern der Wägezelle auszugeben. Eine Wägezelle mit den Merkmalen des Oberbegriffs des Anspruchs 1 ist aus dem Dokument EP 1 998 150 A1 bekannt.

Derartige Wägezellen sind zum Einbau als Fuß in Lastträger wie z.B. Plattformen oder Behälter geeignet, z.B. in der Produktion/Fertigung, im Lager, im Versand oder im Verkauf, und daher zur Gewichtserfassung von unterschiedlichem Wägegut geeignet. Bei derartigen Wägezellen wird das Ausgangssignal, d.h. das Wäge- bzw. Gewichtssignal, über ein Kabel am äußeren Lagerring ausgegeben, wie es beispielsweise aus der EP 0 640 813 A1 bekannt ist. Das Kabel liegt am Boden und führt zu einem Wägeterminal, auf dem das Ausgangssignal angezeigt oder anderweitig verarbeitet wird. Freiliegende Kabel können jedoch Stolperfallen darstellen, wenn sie am Boden verlaufen, oder grundsätzlich Bereiche, an denen man hängen bleiben oder sich verfangen kann.

Das Dokument EP 0 266 917 A1 offenbart einen Messfühler, um mechanische Spannungen in einem Werkstück, insbesondere Torsionsspannungen in einem Stab, zu messen. Hierzu wird das Werkstück angebohrt und der Messfühler wird in die Bohrung eingesetzt. Gemäß einer Ausführungsform wird eine Messfühlerscheibe mit darauf befindlichen Dehnungsmessstreifen über eine Presspassung in einen Stutzen eingesetzt, der in die Bohrung eingeschraubt wird. Dabei verlaufen Verbindungsleitungen von den Dehnungsmessstreifen zu einer in einem Gehäuse angeordneten Elektronik in dem Stutzen.

Der Erfindung liegt die Aufgabe zugrunde, eine Wägezelle der eingangs genannten Art anzugeben, bei der die Verkabelung mit erhöhter Sicherheit möglich ist.

Diese Aufgabe wird durch eine Wägezelle mit den Merkmalen des Anspruchs 1 gelöst, und insbesondere dadurch, dass die Mittel zur externen Ausgabe des Ausgangssignals an dem Krafteinleitungselement vorgesehen sind.

Durch die krafteinleitungsseitige Anordnung der Mittel zur externen Ausgabe des Ausgangssignals ist es möglich, dass das Wägesignal nicht über den Lagerring und damit nicht über ein freiliegendes Kabel ausgegeben werden muss, sondern das Wägesignal kann über das Krafteinleitungselement direkt nach oben an den Lastträger, dessen Gewicht bestimmt wird, und an ein darauf angeordnetes Wägeterminal ausgegeben werden. Freiliegende Leitungen oder Kabel können dabei sogar vollständig vermieden werden. Grundsätzlich kann der Messumformer über die Mittel zur externen Ausgabe des Ausgangssignals auch mit Energie versorgt werden.

Vorzugsweise handelt es sich bei den Mitteln zur externen Ausgabe des Ausgangssignals um eine insbesondere genormte externe Schnittstelle, so dass die Wägezelle besonders einfach elektrisch mit dem Lastträger koppelbar ist. Grundsätzlich wäre es jedoch auch möglich, dass die Mittel durch ein Kabel mit einem abgeschnittenen Kabelende realisiert sind, das über Lüsterklemmen oder dergleichen an lastträgerseitige Leiter für den Wägeterminal angeschlossen wird.

Insbesondere kann es sich bei der externen Schnittstelle um einen insbesondere rotationssymmetrischen Steckverbinder, eine Hardware-Schnittstelle oder einen Transmitter handeln. Der Steckverbinder kann beispielsweise als Klinkenstecker ausgebildet sein, so dass aufgrund dessen rotationssymmetrischer Ausbildung die Ausrichtung der Wägezelle bzw. des Wiegefußes in Drehrichtung relativ zu dem Lastträger keine Rolle spielt. Der Transmitter kann als RF-ID Transmitter, insbesondere gemäß dem NFC-Standard, ausgebildet sein. Bei einem Transmitter erfolgt die Datenübertragung zwischen der Wägezelle und dem Lastträger kontaktlos. In diesem Fall kann die Ankopplung an den Lastträger vollständig ohne Montageaufwand bzw. automatisch erfolgen.

Der Messumformer kann mehrere, insbesondere vier, auf dem Verformungsabschnitt angeordnete Dehnungsmessstreifen zur Erfassung einer streckenden und/oder stauchenden Verformung des Federkörpers und eine mit den Dehnungsmessstreifen elektrisch verbundene Auswerteschaltung umfassen, die dazu ausgebildet ist, das Ausgangssignal zu erzeugen. Üblicherweise sind die Dehnungsmessstreifen elektrisch zu einer Wheatstoneschen Messbrücke oder als Teil hiervon, insbesondere einer Vollbrücke, verschaltet.

Dabei ist es bevorzugt, wenn die Auswerteschaltung an dem Krafteinleitungselement, insbesondere im Inneren des als Krafteinleitungsrohr ausgebildeten Krafteinleitungselements, vorgesehen ist. Vorzugsweise sind die mehreren Dehnungsmessstreifen unterseitig auf dem Verformungsabschnitt angeordnet, insbesondere bei Verwendung des Krafteinleitungsrohrs mit einer darin angeordneten Auswerteschaltung, da dann eine Bond-Draht-Verbindung zwischen den Dehnungsmessstreifen und dem Auswerteschaltung ohne weiteres möglich ist.

Alternativ kann der Messumformer einen Hall-Sensor umfassen, der dazu ausgebildet ist, mit einem Magnet zusammenzuwirken. Zwar ist die Genauigkeit eines Hall-Sensors kleiner als bei Verwendung von Dehnungsmessstreifen, jedoch ist ein Hall-Sensor im Vergleich zu Dehnungsmessstreifen kostengünstiger. Bevorzugt ist der Hall-Sensor an dem Krafteinleitungselement vorgesehen. Der Magnet kann dann an einem Unterteil eines Wiegefußes vorgesehen sein. Grundsätzlich kann die Anordnung auch umgekehrt sein, d.h. der Hall-Sensor ist an dem Unterteil angeordnet, und der Magnet ist an dem Krafteinleitungselement angeordnet.

Bevorzugt ist der ringförmige Verformungsabschnitt als eine kreisringförmige Membran ausgebildet. Bei der Wägezelle handelt es sich dann um eine Membran-Wägezelle. Darüber hinaus kann die Membran oberseitig mit einem umlaufenden Ringsteg versehen sein. Die Dehnungsmessstreifen werden bevorzugt an einer Stelle angeordnet, an der bei einer Krafteinleitung eine möglichst starke Streckung bzw. Stauchung des Federkörpers auftritt, um ein möglichst hohes Signal zu erzeugen. Durch den umlaufenden Ringsteg kann die Breite der Stelle, an der die größte Streckung bzw. Stauchung des Federkörpers auftritt, vergrößert werden.

Wie bereits vorstehend erläutert ist das Krafteinleitungselement als ein Krafteinleitungsrohr ausgebildet, das vertikal orientiert ist. Im Inneren des Krafteinleitungsrohrs sind die Mittel zur externen Ausgabe des Ausgangssignals angeordnet. Insbesondere kann das Innere des Krafteinleitungsrohrs eine Kabeldurchführung bilden. Darüber hinaus kann vorgesehen sein, dass die vorgenannte Auswerteschaltung des Messumformers und/oder ein elektrischer Energiespeicher für den Messumformer in dem Inneren des Krafteinleitungsrohrs angeordnet ist. Bei dem elektrischen Energiespeicher kann es sich beispielsweise um eine Batterie, insbesondere einen Akkumulator, handeln. Ein elektrischer Energiespeicher ist insbesondere bei einer kontaktlosen Datenübertragung zwischen der Wägezelle und dem Lastträger von Vorteil.

Besonders bevorzugt ist es, wenn der Federkörper monolithisch, insbesondere als Drehteil, ausgebildet ist. Der Federkörper ist damit kein komplexes Bauteil aus mehreren Einzelteilen. Der Federkörper ist damit vergleichsweise einfach herstellbar.

Die vorliegende Erfindung betrifft ferner einen Wiegefuß mit einer Wägezelle, wie sie vorstehend beschrieben ist.

Dabei ist es besonders bevorzugt, wenn das Krafteinleitungselement an seinem oberen Ende ein Außengewinde aufweist. Dadurch kann der Wiegefuß einfach, insbesondere auch nachträglich, an beliebige Lastträger wie Lastplatten, Paletten, Kisten, Regale, Regaleinsätze, Tischfüße oder dergleichen geschraubt werden.

Vorzugsweise umfasst der Wiegefuß ein insbesondere kugelsegmentförmiges Unterteil, auf dem sich der äußere Lagerring der Wägezelle abstützt. Dabei ist es bevorzugt, wenn zum Schutz gegen Fremdkörper und Wasser das Unterteil den Verformungsabschnitt nach unten hin hermetisch dicht verschließt.

Darüber hinaus betrifft die vorliegende Erfindung ein Wägesystem mit mehreren, insbesondere zwei oder vier, Wiegefüßen, wie sie vorstehend beschrieben sind, und mit einem auf den mehreren Wiegefüßen abgestützten Lastträger.

Weitere vorteilhafte Ausgestaltungen der Erfindung sind in den Ansprüchen, der Figurenbeschreibung und der Zeichnung beschrieben.

Die Erfindung wird im Folgenden beispielhaft unter Bezugnahme auf die Zeichnung beschrieben. Es zeigen,
- Fig. 1: einen erfindungsgemäßen Wiegefuß in einer perspektivischen Ansicht,
- Fig. 2: einen Federkörper im Querschnitt,
- Fig. 3: eine Teilansicht des Federkörpers aus Fig. 2 bei einwirkender Gewichtsbelastung,
- Fig. 4: den Federkörper aus Fig. 2 mit an der Unterseite angebrachten Dehnungsmessstreifen,
- Fig. 5A: eine Ansicht von unten auf den Federkörper gemäß Fig. 4, wobei die Dehnungsmesstreifen eine erste Anordnung aufweisen,
- Fig. 5B: den Federkörper aus Fig. 2, wobei die Dehnungsmesstreifen jedoch eine zweite Anordnung aufweisen,
- Fig. 6A: den Federkörper aus Fig. 2, der oberseitig zusätzlich mit einem umlaufenden Ringsteg versehen ist,
- Fig. 6B: einen Federkörper gemäß einer weiteren Ausführungsform im Querschnitt,
- Fig. 7: ein erfindungsgemäßes Wägesystem,
- Fig. 8: ein weiteres erfindungsgemäßes Wägesystem,
- Fig. 9A: einen Federkörper gemäß einer weiteren Ausführungsform mit einem Hall-Element in einer ersten Anordnung,
- Fig. 9B: einen zu Fig. 9A ähnlichen Federkörper mit dem Hall-Element in einer zweiten Anordnung, und
- Fig. 9C: den Federkörper aus Fig. 9bA mit dem Hall-Element in einer dritten Anordnung.

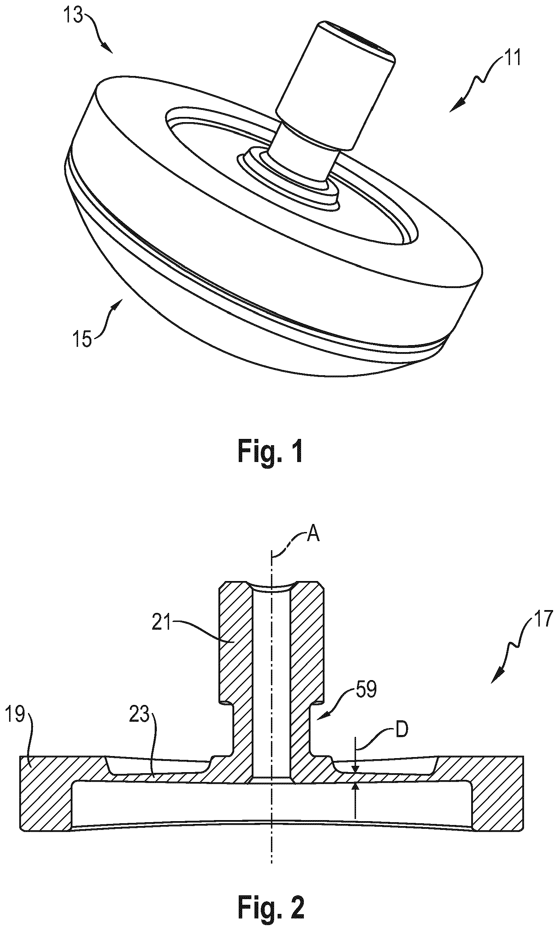

Der in Fig. 1 dargestellte erfindungsgemäße Wiegefuß 11 umfasst eine erfindungsgemäße Wägezelle 13 und ein als Vollkörper ausgebildetes kugelsegmentförmiges Unterteil 15, auf dem sich die Wägezelle 13 abstützt. Die Wägezelle 13 umfasst einen monolithisch und um eine Mittelachse A rotationssymmetrisch ausgebildeten Federkörper 17 (vgl. Fig. 2). Der Federkörper 17 umfasst einen äußeren Lagerring 19 und ein nach oben abstehendes, inneres Krafteinleitungselement 21. Der äußere Lagerring 19 und das innere Krafteinleitungselement 21 sind über einen ringförmigen Verformungsabschnitt 23 fest miteinander verbunden. Die Verbindung zwischen der Wägezelle 13 und dem Unterteil 15 ist dabei derart, dass sich die Wägezelle 13 über den äußeren Lagerring 19 auf dem Unterteil 15 abstützt und der Verformungsabschnitt 23 durch das Unterteil 15 nach unten hin hermetisch dicht verschlossen wird.

Der ringförmige Verformungsabschnitt 23 ist als eine kreisringförmige Membran 23 ausgebildet. Das innere Krafteinleitungselement 21 ist als ein vertikal orientiertes Krafteinleitungsrohr 21 ausgebildet, an dessen oberen Ende ein Außengewinde vorgesehen ist, über das der Wiegefuß 11 von unten in einen Lastträger eingeschraubt werden kann.

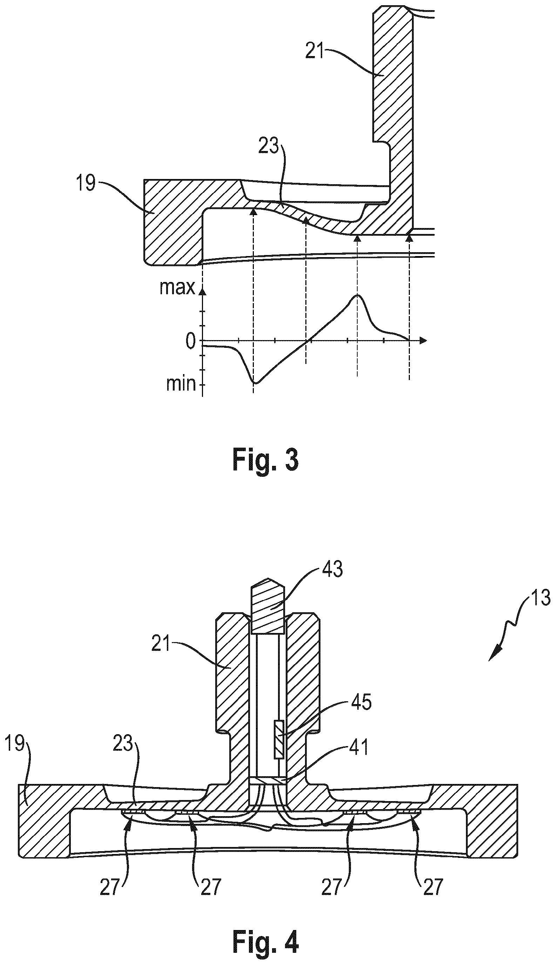

Wirkt über das Krafteinleitungsrohr 21 eine Gewichtskraft auf den Federkörper 17 ein, bewegt sich das Krafteinleitungsrohr 21, insbesondere relativ zu dem feststehenden äußeren Lagerring 19, geringfügig vertikal nach unten, wobei sich die Membran 23 des Federkörpers 17 in der in Fig. 3 gezeigten Art verformt. In der unteren Hälfte der Fig. 3 ist ein Diagramm dargestellt, das die Dehnungsverteilung des Federkörpers 17, d.h. die Dehnung des Federkörpers 17 abhängig von der jeweiligen radialen Position, zeigt. Wie sich aus diesem Diagramm anhand des dargestellten Maximums bzw. Minimums der die Dehnungsverteilung darstellenden Kurve ergibt, erfährt die Unterseite des Federkörpers 17 bei Belastung im Bereich des Übergangs zu dem Krafteinleitungsrohr 21 eine Streckung (positive Dehnung) und im Bereich des Übergangs zu dem äußeren Lagerring 19 eine Stauchung (negative Dehnung). Zwischen dem Maximum und dem Minimum besitzt die dargestellte Kurve eine Nullstelle.

Diese Verformung des Federkörpers 17 kann über vier, auf die eben ausgebildete Unterseite der Membran 23 aufgebrachte, insbesondere in den beiden vorgenannten Bereichen angeordnete, Dehnungsmessstreifen 27, deren elektrischer Widerstand sich in Abhängigkeit von der Dehnung ändert, detektiert werden (vgl. Fig. 4), wobei auf zwei einander gegenüberliegenden Seiten des Krafteinleitungsrohrs 21 jeweils zwei Dehnungsmessstreifen 27 angeordnet sind. Wie sich aus einem Vergleich mit Fig. 3 ergibt, handelt es sich bei den beiden innen liegenden Dehnungsmessstreifen 27 um zugbeanspruchte Dehnungsmessstreifen, die eine Streckung der Membran 23 erfassen, und bei den beiden außen liegenden Dehnungsmessstreifen 27 um druckbeanspruchte Dehnungsmessstreifen, die eine Stauchung der Membran 27 erfassen.

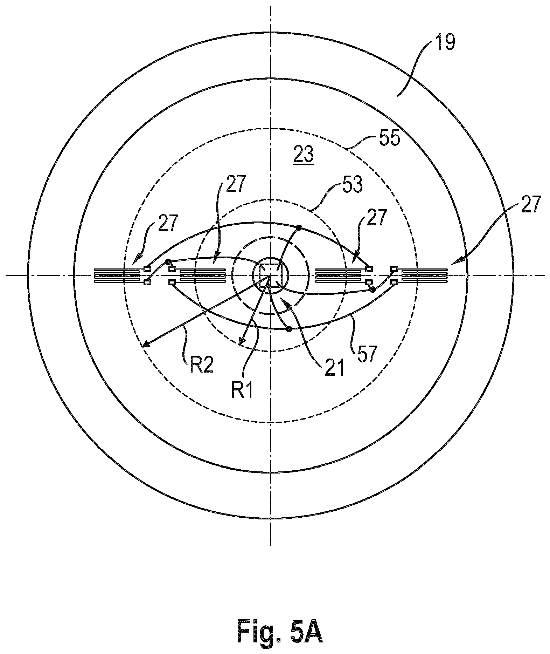

Wie in Fig. 5A näher dargestellt ist, sind die vier Dehnungsmessstreifen 27 über Bond-Drähte 57 (von denen der Übersichtlichkeit halber lediglich einer mit einem Bezugszeichen versehen ist) elektrisch zu einer Wheatstoneschen Vollbrücke verschaltet, wobei die Messgitter der Dehnungsmessstreifen 27 jeweils in radialer Richtung orientiert sind, d.h. Messrichtung der Dehnungsmessstreifen 27 liegt jeweils in radialer Richtung. Die beiden inneren, zugbeanspruchten Dehnungsmessstreifen 27 liegen auf einem ersten Kreis 53 mit einem ersten Radius R1, und die beiden äußeren, druckbeanspruchten Dehnungsmessstreifen 27 liegen auf einem zweiten Kreis 55 mit einem größerem zweiten Radius R2. Die vier Dehnungsmessstreifen 27 sind dabei entlang einer gemeinsamen Linie durch die Mittelachse A des Federkörpers 17 angeordnet. Durch die Linienanordnung der Dehnungsmessstreifen 27 und die hiermit verbundene Symmetrie kann die Fertigungstoleranz erhöht werden, da sich dann zumindest bestimmte Fertigungsabweichungen gegenseitig ausgleichen können.

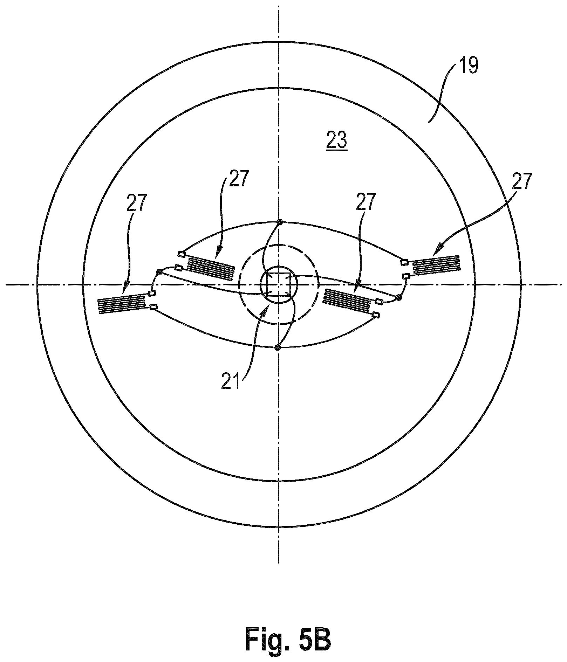

Aus Fig. 5B ist ersichtlich, dass die Dehnungsmessstreifen 27 auch geringfügig von der Linienanordnung gemäß Fig. 5A abweichend platziert werden können, insbesondere derart, dass die beiden inneren Dehnungsmessstreifen 27 entlang einer ersten Linie und die beiden äußeren Dehnungsmessstreifen 27 entlang einer zweiten Linie durch die Mittelachse A des Federkörpers 17 angeordnet sind, wobei die beiden Linien geringfügig gegeneinander verdreht sind. Hierdurch wird ermöglicht, den radialen Abstand der beiden auf einer Seite nebeneinander angeordneten Dehnungsmessstreifen 27 zu verringern, so dass ein Federkörper 17 mit geringerem Durchmesser gewählt werden kann, wodurch die Wägezelle 13 kompakter gestaltet werden kann. Der im Zusammenhang mit der Linienanordnung gemäß Fig. 5A genannte Vorteil der höheren Fertigungstoleranz bleibt dabei, d.h. bei geringfügig abweichender Platzierung, großteils erhalten.

Wie insbesondere aus der Fig. 2 erkennbar ist, ist die mittlere Dicke D der kreisringförmigen Membran 23 im Bereich des kleineren ersten Radius R1, d.h. bei den beiden inneren Dehnungsmessstreifen 27, größer ist als im Bereich des zweiten Radius R2, d.h. bei den beiden äußeren Dehnungsmessstreifen 27. Hierdurch wird ermöglicht, dass in beiden Bereichen betragsmäßig gleiche bzw. zumindest ähnliche Dehnungen erhalten werden, so dass die Widerstands-/Belastungskennlinien der beiden inneren Dehnungsmesstreifen 27 einerseits und die Widerstands-/Belastungskennlinien der beiden äußeren Dehnungsmessstreifen 27 andererseits - trotz unterschiedlicher Radien - betragsmäßig einander zumindest im Wesentlichen entsprechen. Hierdurch wird die Auswertung der Brückenspannung der Brückenschaltung erleichtert und die Genauigkeit der Wägezelle 13 erhöht.

Die größere Dicke der Membran 23 weiter innen im Vergleich zu weiter außen lässt sich durch die Verhältnisse aus Flächenträgheitsmoment und Abstand des jeweiligen Bereichs zu der Krafteinleitung begründen. Veranschaulicht bzw. vereinfacht formuliert ist im Bereich des größeren zweiten Radius R2 aufgrund des größeren Umfangs eine geringe Dicke erforderlich, um auf dasselbe Materialvolumen und damit ein analoges Dehnungsverhalten zu kommen wie im Bereich des kleineren ersten Radius R2 mit dem kleineren Umfang.

Gemäß der dargestellten Ausführungsform nimmt die Dicke der Membran 23 von innen nach außen monoton ab, insbesondere linear ab. Eine derartige Membran 23 ist besonders einfach herstellbar. Grundsätzlich sind jedoch auch andere Übergänge von der größeren inneren Dicke zu der geringeren äußeren Dicke denkbar, beispielsweise eine stufenförmige Abnahme.

An ihrer Oberseite weist die kreisringförmige Membran 23 in ihrem Übergangsbereich zu dem äußeren Lagerring 19 und in ihrem Übergangsbereich zu dem inneren Krafteinleitungselement 21 jeweils einen gerundeten Verlauf auf. Darüber hinaus weist das innere Krafteinleitungselement 21 an seinem unteren Ende einen Hinterschnitt 59 auf, so dass die Krafteinleitung möglichst nahe an der Mittelachse A des Federkörpers 17 erfolgt. Hierdurch kann die Genauigkeit der Wägezelle 13 jeweils deutlich weiter verbessert werden.

Die Dehnungsmessstreifen 27 sind elektrisch mit einer Auswerteschaltung 41 verbunden (vgl. Fig. 4), die in an sich bekannter Weise aus der Brückenspannung der zu der Vollbrücke verschalteten Dehnungsmessstreifen 27 das auf die Wägezelle 13 jeweils einwirkende Gewicht berechnet und ein entsprechendes Ausgangssignal erzeugt. Die Dehnungsmessstreifen 27 bilden daher zusammen mit der Auswerteschaltung 41 einen Messumformer im Sinne der vorliegenden Anmeldung. Die Auswerteschaltung 41 ist dabei innerhalb des Krafteinleitungsrohrs 21 angeordnet.

Wie in Fig. 4 dargestellt ist, kann das Ausgangssignal der Auswerteschaltung 41 beispielsweise über einen Stecker 43, der mit der Auswertschaltung 41 elektrisch verbunden ist, nach extern, insbesondere einen Lastträger, wie er vorstehend und nachstehend beschrieben ist, ausgegeben werden. Der Stecker 43 ist dabei innerhalb des Krafteinleitungsrohrs 21 angeordnet. Wenn der Wiegefuß 11 über das Krafteinleitungsrohr 21 bzw. dessen Außengewinde von unten in einen Lastträger eingeschraubt ist, hat dies den Vorteil, dass das Ausgangssignal unmittelbar und auf kürzestem Weg an den Lastträger bzw. ein Wägeterminal des Lastträgers ausgegeben und dort angezeigt werden kann, ohne dass hierfür zusätzlich externe Kabel oder dergleichen erforderlich sind, wie dies der Fall wäre, wenn das Ausgangssignal lagerringseitig nach extern ausgegeben werden würde. Als weiteres Mittel zur externen Ausgabe des Ausgangssignals kommen im Übrigen auch andere externe Schnittstellen, insbesondere kontaktlose Mittel wie etwa ein Transmitter, der beispielsweise auf dem NFC-Standard basieren kann, in Frage.

Insbesondere bei einer kontaktlosen Ausbildung der Schnittstelle zwischen Wiegefuß 11 und Lastträger kann vorgesehen sein, dass ein interner elektrischer Energiespeicher 45 wie z.B. eine Batterie vorgesehen ist, um die Wägezelle 13 bzw. den Wiegefuß 11 unabhängig von einer externen Energieversorgung, d.h. autark, auszubilden. Der elektrische Energiespeicher 45 ist bevorzugt dann ebenfalls innerhalb des Krafteinleitungsrohrs 21 angeordnet.

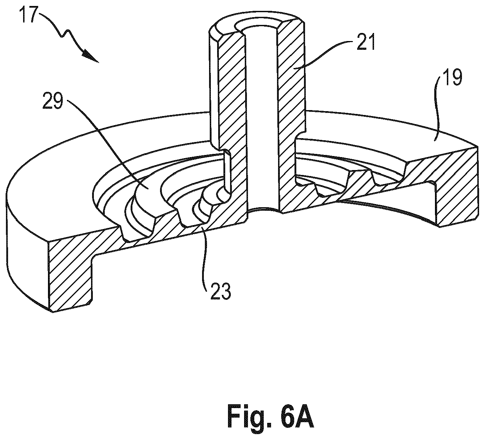

In Fig. 6A ist eine weitere Ausführungsform eines Federkörpers 17 dargestellt. Gegenüber dem Federkörper 17 gemäß den Fig. 1 bis 4 ist die Membran 23 des Federkörpers 17 gemäß Fig. 6A an ihrer Oberseite mit einem umlaufenden Ringsteg 29 versehen, der in radialer Richtung zumindest im Wesentlichen mittig der Membran 23 angeordnet ist. Es hat sich herausgestellt, dass hierdurch die Breite des Maximums und die Breite des Minimums der in Fig. 3 dargestellten Dehnungsverteilung des Federkörpers 17 vergrößert werden kann. Die Fertigungstoleranz kann dadurch erhöht werden. Darüber hinaus hat sich herausgestellt, dass es insbesondere bei Vorhandensein des Ringstegs 29 vorteilhaft sein kann, wenn die beiden inneren Dehnungsmessstreifen 27 mit dem inneren Krafteinleitungsrohr 21 und die beiden äußeren Dehnungsmessstreifen 27 mit dem äußeren Lagerring 19 überlappend angeordnet sind, um möglichst lineare Abhängigkeiten der relativen Widerstandsänderungen von der Dehnung zu erhalten, um die Genauigkeit der Wägezelle 13 zu erhöhen.

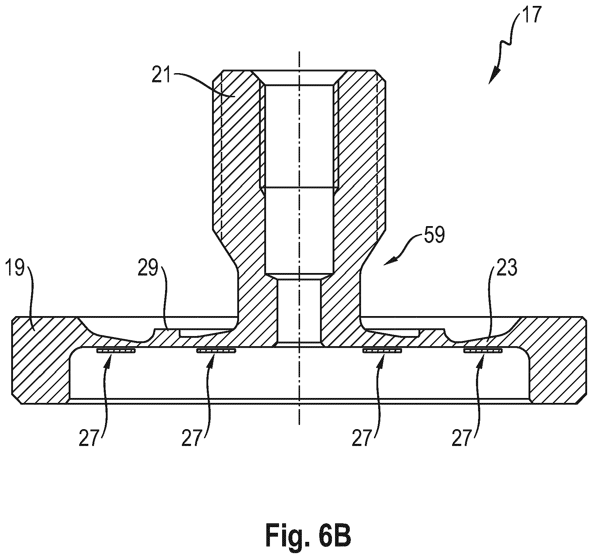

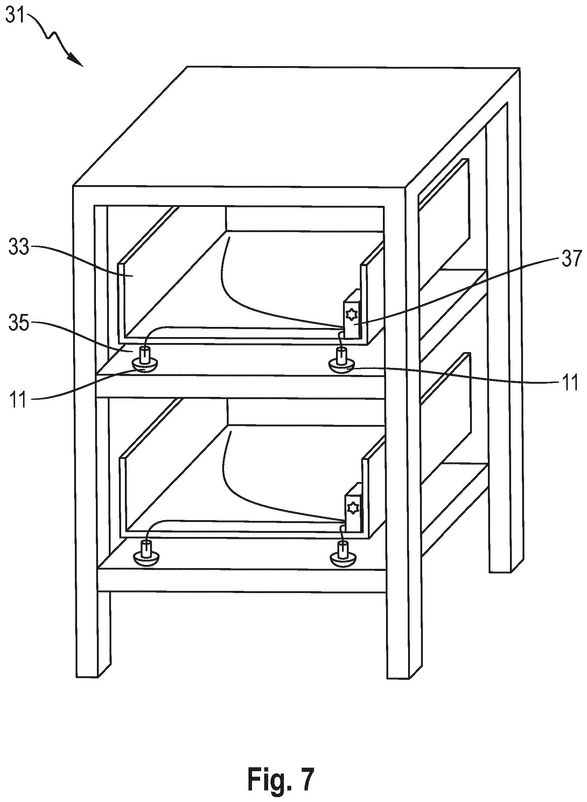

In Fig. 6B ist ein weiterer Federkörper 17 in etwas anderer Ausführung dargestellt. Der Federkörper 17 gemäß Fig. 7 unterscheidet sich von dem Federkörper 17 gemäß Fig. 2 dadurch, dass die Dicke der Membran 23 im Bereich der beiden inneren Dehnungsmessstreifen 27 von innen nach außen abnimmt und im Bereich der beiden äußeren Dehnungsmessstreifen 27 von innen nach außen zunimmt. Die mittlere Dicke D der Membran 23 im Bereich der beiden inneren Dehnungsmessstreifen 27 ist dabei aber weiterhin - und damit erfindungsgemäß - größer als die mittlere Dicke D der Membran 23 im Bereich der beiden äußeren Dehnungsmessstreifen 27. Darüber hinaus ist der umlaufende Ringsteg 29 im Unterschied zu der Ausführungsform gemäß Fig. 6A weniger hoch ausgebildet.

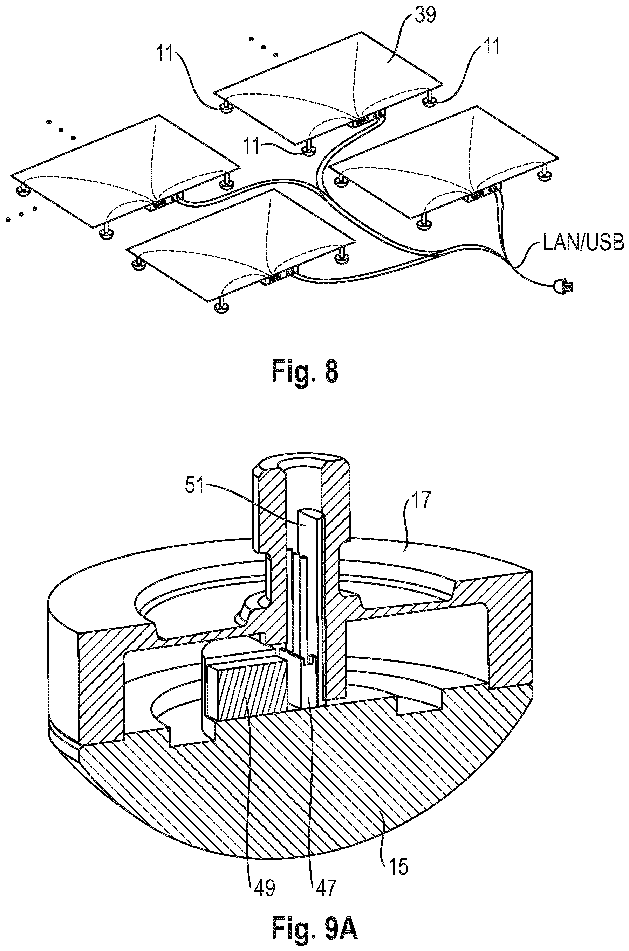

Die Fig. 7 und 8 zeigen zwei verschiedene Anwendungen des erfindungsgemäßen Wiegefußes 11. In Fig. 7 ist ein Supermarkt-Regal 31 mit beispielhaft zwei Regaleinsätzen 33 gezeigt, die jeweils über z.B. vier Wiegefüße 11 auf einem Regalboden 35 aufgestellt sind. Durch eine jeweilige Überwachungseinrichtung 37, die mit sämtlichen Wiegefüßen 11 des jeweiligen Regaleinsatzes 33 verbunden ist, kann das Gesamtgewicht des jeweiligen Regaleinsatzes 33 einschließlich der sich darin befindlichen Waren, beispielsweise Brot, bestimmt werden. Hierdurch kann der "Füllstand" des Regaleinsatzes 33 überwacht werden. Fällt das Gesamtgewicht des Regaleinsatzes 33 unter einen vorbestimmten Wert, d.h. kann beispielsweise eine in die Überwachungseinrichtung 37 integrierte oder separat hiervon ausgebildete Anzeige aufleuchten, um diesen Zustand anzuzeigen. In Fig. 8 sind mehrere Plattformen 39, beispielsweise Paletten, gezeigt, wie sie z.B. in einem Warenlager vorkommen können. Die Plattformen 39 stützen sich jeweils auf vier Wiegefüßen 11 ab, um das Gesamtgewicht der jeweiligen Plattform 39 einschließlich der darauf angeordneten Ware zu bestimmen. Ist auf sämtlichen Plattformen 39 die gleiche Ware gestapelt, können die Gesamtgewichte aller Plattformen kabelgebunden oder kabellos, z.B. per WLAN, zusammengeführt werden, wodurch eine permanente Bestandsaufnahme der jeweiligen Ware möglich ist.

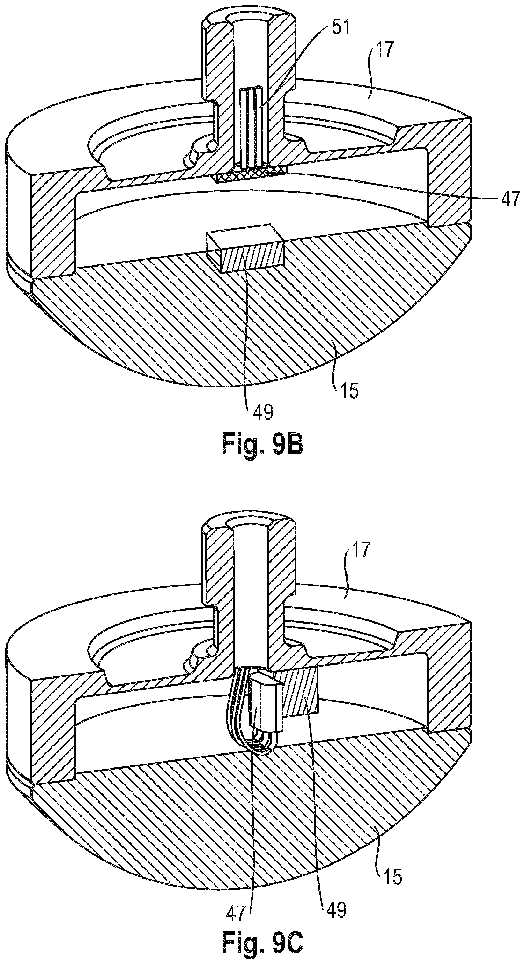

In den Fig. 9A bis 9C ist gezeigt, dass anstelle eines Messumformers, der auf Dehnungsmessstreifen und einer zugehörigen Auswerteeinheit basiert, auch ein auf einem Hall-Sensor 47 basierender Messumformer eingesetzt werden kann. Gemäß Fig. 9A kann der Hall-Sensor 47 samt einer Verkabelung 51 hierzu an dem Krafteinleitungsrohr 21 vorgesehen sein, und ein Magnet 49, dessen Magnetfeld von dem Hall-Sensor 47 detektiert wird, kann auf der Oberseite des Unterteils 15, gegenüber dem sich das Krafteinleitungsrohr 21 bei Krafteinwirkung bewegt, angebracht sein. Aus der durch die Relativbewegung zwischen Hall-Sensor 47 und Magnet 49 bedingten Änderung des von dem Hall-Sensor 47 detektierten Magnetfelds kann das auf das Krafteinleitungsrohr 21 einwirkende Gewicht berechnet werden. Die Anordnung kann dabei beispielsweise derart gewählt sein, dass Hall-Sensor 47 und Magnet 49 nebeneinander angeordnet sind. Darüber hinaus ist es auch möglich, dass der Magnet 49 in dem Unterteil 15 eingebettet ist und/oder dass Hall-Sensor 47 und Magnet 49 übereinander angeordnet sind (vgl. Fig. 9B). Darüber hinaus ist es grundsätzlich auch denkbar, dass der Hall-Sensor 47 an dem Unterteil 15 und der Magnet 49 an dem Krafteinleitungsrohr 21 angebracht ist, wie es in Fig. 9C gezeigt ist.

### Bezugszeichenliste

- 11: Wiegefuß
- 13: Wägezelle
- 15: Unterteil
- 17: Federkörper
- 19: Lagerring
- 21: Krafteinleitungsrohr
- 23: Membran
- 27: Dehnungsmessstreifen
- 29: Ringsteg
- 31: Regal
- 33: Regaleinsatz
- 35: Regalboden
- 37: Überwachungseinrichtung
- 39: Plattform
- 41: Auswerteschaltung
- 43: Stecker
- 45: elektrischer Energiespeicher
- 47: Hall-Sensor
- 49: Magnet
- 51: Verkabelung
- 53: erster Kreis
- 55: zweiter Kreis
- 57: Bond-Draht
- 59: Hinterschnitt

- A: Mittelachse
- D: Dicke
- R1: erster Radius
- R2: zweiter Radius

## Patentansprüche

1. Wägezelle (13) umfassend
einen Federkörper (17) mit einem äußeren Lagerring (19), einem inneren Krafteinleitungselement (21) und einem ringförmigen Verformungsabschnitt (23), über den der Lagerring (19) und das Krafteinleitungselement (21) fest miteinander verbunden sind,
einen Messumformer (27, 41; 47) zur Erzeugung eines einem auf das Krafteinleitungselement (21) einwirkenden Gewicht entsprechenden Ausgangssignals, und
mit dem Messumformer (27, 41; 47) elektrisch verbundene Mittel (43), die dazu ausgebildet sind, das von dem Messumformer (27, 41; 47) erzeugte Ausgangssignal nach extern auszugeben,
**dadurch gekennzeichnet , dass**
die Mittel (43) zur externen Ausgabe des Ausgangssignals an dem Krafteinleitungselement (21) vorgesehen sind,
das Krafteinleitungselement (21) als ein vertikal orientiertes Krafteinleitungsrohr (21) ausgebildet ist, und
die Mittel zur externen Ausgabe des Ausgangssignals in dem Inneren des Krafteinleitungsrohrs (21) angeordnet sind.

2. Wägezelle nach Anspruch 1,
**dadurch gekennzeichnet, dass**
es sich bei den Mitteln (43) zur externen Ausgabe des Ausgangssignals um eine externe Schnittstelle (43) handelt.

3. Wägezelle nach Anspruch 2,
**dadurch gekennzeichnet , dass**
es sich bei der externen Schnittstelle (43) um einen Steckverbinder (43), eine Hardware-Schnittstelle oder einen Transmitter handelt.

4. Wägezelle nach zumindest einem der vorstehenden Ansprüche,
**dadurch gekennzeichnet , dass**
der Messumformer (27, 41) mehrere auf dem Verformungsabschnitt (23) angeordnete, elektrisch zu einer Wheatstoneschen Messbrücke oder als Teil hiervon verschaltete Dehnungsmessstreifen (27) zur Erfassung einer streckenden und/oder stauchenden Verformung des Federkörpers (17) und eine mit den Dehnungsmessstreifen (27) elektrisch verbundene Auswerteschaltung (41) umfasst, die dazu ausgebildet ist, das Ausgangssignal zu erzeugen, wobei bevorzugt die Auswerteschaltung (41) an dem Krafteinleitungselement (21) vorgesehen ist.

5. Wägezelle nach Anspruch 4,
**dadurch gekennzeichnet , dass**
die mehreren Dehnungsmessstreifen (27) unterseitig auf dem Verformungsabschnitt (23) angeordnet sind.

6. Wägezelle nach zumindest einem der Ansprüche 1 bis 3,
**dadurch gekennzeichnet , dass**
der Messumformer (47) einen Hall-Sensor (47) umfasst, der dazu ausgebildet ist, mit einem Magnet (49) zusammenzuwirken, wobei bevorzugt der Hall-Sensor (47) an dem Krafteinleitungselement (21) vorgesehen ist.

7. Wägezelle nach zumindest einem der vorstehenden Ansprüche,
**dadurch gekennzeichnet , dass**
der ringförmige Verformungsabschnitt (23) als eine kreisringförmige Membran (23) ausgebildet ist.

8. Wägezelle nach Anspruch 7,
**dadurch gekennzeichnet , dass**
die Membran (23) oberseitig mit einem umlaufenden Ringsteg (29) versehen ist.

9. Wägezelle nach zumindest einem der vorstehenden Ansprüche,
**dadurch gekennzeichnet , dass**
eine Auswerteschaltung (41) des Messumformers (27, 41) und/oder ein elektrischer Energiespeicher (45) für den Messumformer (27, 41; 47) in dem Inneren des Krafteinleitungsrohrs (21) angeordnet ist bzw. sind.

10. Wägezelle nach zumindest einem der vorstehenden Ansprüche,
**dadurch gekennzeichnet , dass**
der Federkörper (17) monolithisch ausgebildet ist.

11. Wiegefuß (11) mit einer Wägezelle (13) nach einem der vorstehenden Ansprüche.

12. Wiegefuß nach Anspruch 11,
**dadurch gekennzeichnet , dass**
das Krafteinleitungselement (21) an seinem oberen Ende ein Außengewinde aufweist.

13. Wiegefuß nach Anspruch 11 oder 12,
**dadurch gekennzeichnet , dass**
der Wiegefuß (11) ein Unterteil (15) umfasst, auf dem sich der äußere Lagerring (19) der Wägezelle (13) abstützt, wobei bevorzugt das Unterteil (15) den Verformungsabschnitt (23) nach unten hin hermetisch dicht verschließt.

14. Wägesystem mit mehreren, insbesondere zwei oder vier, Wiegefüßen (11) jeweils nach einem der vorstehenden Ansprüche 11 bis 13 und mit einem auf den mehreren Wiegefüßen (11) abgestützten Lastträger (33, 39).

## Claims

1. A load cell (13) comprising
a spring body (17) having an outer support ring (19), having an inner force introduction element (21), and having an annular deformation section (23) via which the support ring (19) and the force introduction element (21) are fixedly connected to one another;
a measuring transducer (27, 41; 47) for generating an output signal corresponding to a weight acting on the force introduction element (21); and means (43) which are electrically connected to the measuring transducer (27, 41; 47) and which are configured to output the output signal generated by the measuring transducer (27, 41; 47) to external,
**characterized in that**
the means (43) for the external output of the output signal are provided at the force introduction element (21),
the force introduction element (21) is configured as a vertically oriented force introduction pipe (21), and
the means for the external output of the output signal are arranged in the interior of the force introduction pipe (21).

2. A load cell in accordance with claim 1,
**characterized in that**
the means (43) for the external output of the output signal are an external interface (43).

3. A load cell in accordance with claim 2,
**characterized in that**
the external interface (43) is a plug connector (43), a hardware interface or a transmitter.

4. A load cell in accordance with at least one of the preceding claims,
**characterized in that**
the measuring transducer (27, 41) comprises a plurality of strain gauges (27) arranged on the deformation section (23) and electrically connected to form a Wheatstone bridge or as a part thereof to detect a stretching and/or compressive deformation of the spring body (17) and an evaluation circuit (41) which is electrically connected to the strain gauges (27) and which is configured to generate the output signal, with the evaluation circuit (41) preferably being provided at the force introduction element (21).

5. A load cell in accordance with claim 4,
**characterized in that**
the plurality of strain gauges (27) are arranged at the lower side on the deformation section (23).

6. A load cell in accordance with at least one of the claims 1 to 3,
**characterized in that**
the measuring transducer (47) comprises a Hall sensor (47) which is configured to cooperate with a magnet (49), with the Hall sensor (47) preferably being provided at the force introduction element (21).

7. A load cell in accordance with at least one of the preceding claims,
**characterized in that**
the annular deformation section (23) is formed as an annular membrane (23).

8. A load cell in accordance with claim 7,
**characterized in that**
the membrane (23) is provided with a peripheral annular web (29) at the upper side.

9. A load cell in accordance with at least one of the preceding claims,
**characterized in that**
an evaluation circuit (41) of the measuring transducer (27, 41) and/or an electrical energy store (45) for the measuring transducer (27, 41; 47) is/are arranged in the interior of the force introduction pipe (21).

10. A load cell in accordance with at least one of the preceding claims,
**characterized in that**
the spring body (17) is configured in monolithic form.

11. A weighing foot (11) having a load cell (13) in accordance with any one of the preceding claims.

12. A weighing foot in accordance with claim 11,
**characterized in that**
the force introduction element (21) has an external thread at its upper end.

13. A weighing foot in accordance with claim 11 or claim 12,
**characterized in that**
the weighing foot (11) comprises a lower part (15) on which the outer support ring (19) of the load cell (13) is supported, with the lower part (15) preferably hermetically tightly sealing the deformation section (23) downwardly.

14. A weighing system having a plurality of weighing feet (11), in particular two or four weighing feet (11), in each case in accordance with any one of the preceding claims 11 to 13, and having a load carrier (33, 39) supported on the plurality of weighing feet (11).

## Revendications

1. Cellule de pesage (13) comprenant
un corps élastique (17) ayant une bague de palier extérieure (19), un élément d'introduction de force intérieur (21) et une portion de déformation annulaire (23), par laquelle la bague de palier (19) et l'élément d'introduction de force (21) sont solidaires l'un de l'autre,
un transducteur de mesure (27, 41 ; 47) pour générer un signal de sortie correspondant à un poids agissant sur l'élément d'introduction de force (21), et
des moyens (43) connectés électriquement au transducteur de mesure (27, 41 ; 47), qui sont réalisés pour émettre vers l'extérieur le signal de sortie généré par le transducteur de mesure (27, 41 ; 47),
**caractérisée en ce que**
les moyens (43) de sortie externe du signal de sortie sont prévus sur l'élément d'introduction de force (21),
l'élément d'introduction de force (21) est réalisé sous la forme d'un tube d'introduction de force (21) orienté verticalement, et
les moyens de sortie externe du signal de sortie sont disposés à l'intérieur du tube d'introduction de force (21).

2. Cellule de pesage selon la revendication 1,
**caractérisée en ce que**
les moyens (43) de sortie externe du signal de sortie sont une interface externe (43).

3. Cellule de pesage selon la revendication 2,
**caractérisée en ce que**
l'interface externe (43) est un connecteur d'enfichage(43), une interface matérielle ou un transmetteur.

4. Cellule de pesage selon l'une au moins des revendications précédentes,
**caractérisée en ce que**
le transducteur de mesure (27, 41) comprend plusieurs jauges de contrainte (27) disposées sur la portion de déformation (23) et connectées électriquement en un pont de mesure de Wheatstone ou en une partie de celui-ci, pour détecter une déformation en extension et/ou en compression du corps élastique (17), et un circuit d'évaluation (41) connecté électriquement aux jauges de contrainte (27) et réalisé pour générer le signal de sortie, le circuit d'évaluation (41) étant de préférence prévu sur l'élément d'introduction de force (21).

5. Cellule de pesage selon la revendication 4,
**caractérisée en ce que**
lesdites plusieurs jauges de contrainte (27) sont disposées sur la face inférieure de la portion de déformation (23).

6. Cellule de pesage selon l'une au moins des revendications 1 à 3,
**caractérisée en ce que**
le transducteur de mesure (47) comprend un capteur à effet Hall (47) réalisé pour coopérer avec un aimant (49), le capteur à effet Hall (47) étant de préférence prévu sur l'élément d'introduction de force (21).

7. Cellule de pesage selon l'une au moins des revendications précédentes,
**caractérisée en ce que**
la portion de déformation annulaire (23) est réalisée sous la forme d'une membrane en forme d'anneau circulaire (23).

8. Cellule de pesage selon la revendication 7,
**caractérisée en ce que**
la membrane (23) est munie sur sa face supérieure d'une nervure annulaire périphérique (29).

9. Cellule de pesage selon l'une au moins des revendications précédentes,
**caractérisée en ce que**
un circuit d'évaluation (41) du transducteur de mesure (27, 41) et/ou un accumulateur d'énergie électrique (45) pour le transducteur de mesure (27, 41 ; 47) est ou sont disposé(s) à l'intérieur du tube d'introduction de force (21).

10. Cellule de pesage selon l'une au moins des revendications précédentes,
**caractérisée en ce que**
le corps élastique (17) est monolithique.

11. Pied de pesage (11) comprenant une cellule de pesage (13) selon l'une des revendications précédentes.

12. Pied de pesage selon la revendication 11,
**caractérisé en ce que**
l'élément d'introduction de force (21) présente un filetage extérieur à son extrémité supérieure.

13. Pied de pesage selon la revendication 11 ou 12,
**caractérisé en ce que**
le pied de pesage (11) comprend une partie inférieure (15) sur laquelle s'appuie la bague de palier extérieure (19) de la cellule de pesage (13), de préférence la partie inférieure (15) refermant de façon hermétiquement étanche la portion de déformation (23) vers le bas.

14. Système de pesage comportant plusieurs pieds de pesage (11), en particulier deux ou quatre, chacun selon l'une des revendications précédentes 11 à 13, et comportant un porte-charge (33, 39) prenant appui sur lesdits plusieurs pieds de pesage (11).
